# EUROPÄISCHE PATENTSCHRIFT

(11) **EP 2 101 562 B1**
(45) Veröffentlichungstag und Bekanntmachung des Hinweises auf die Patenterteilung: **25.07.2012**
(21) Anmeldenummer: 07846588.7
(22) Anmeldetag: 14.11.2007
(51) Int. Cl.: A01J 7/02

(54) **REINIGUNGSANLAGE FÜR MELKBECHER**
CLEANING SYSTEM FOR MILKING CUPS
SYSTÈME DE NETTOYAGE POUR GOBELET TRAYEUR

(30) Priorität: 14.11.2006 DE 102006053602
(43) Veröffentlichungstag der Anmeldung: 23.09.2009
(73) Patentinhaber: Maier, Jakob, 86842 Türkheim (DE); Hatzack, Wilfried, 86842 Türkheim (DE)
(72) Erfinder: Maier, Jakob, 86842 Türkheim (DE); Hatzack, Wilfried, 86842 Türkheim (DE)
(74) Vertreter: Grünecker, Kinkeldey, Stockmair & Schwanhäusser
(86) Internationale Anmeldenummer: PCT/EP2007/009842
(87) Internationale Veröffentlichungsnummer: WO 2008/058723

(56) Entgegenhaltungen:
- EP-A- 1 084 608
- EP-A- 1 579 758
- WO-A-03/077645
- WO-A-2006/073368
- DE-A1- 4 432 754
- US-A- 4 175 514
- US-A- 5 678 506

## Beschreibung

Die vorliegende Erfindung betrifft das Melken von Milchtieren unter Anwendung eines Melkgeschirrs mit mehreren Melkbechern, wobei insbesondere eine Reinigung bzw. Desinfektion der Melkbecher zwischen den einzelnen Melkvorgängen ausgeführt wird.

Derartige Reinigungsanlagen sind beispielsweise aus WO 03/077645 bekannt.

Mit der zunehmenden Globalisierung der Agrarmärkte werden an die Erzeuger von Milch und Milchprodukten zunehmend höhere Anforderungen gestellt. Zum einen muss die Milch möglichst preisgünstig erzeugt werden, andererseits ist jedoch auch eine hohe Qualität der Milch beizubehalten. Um die Erzeugung großer Mengen von Milch in einem Agrarbetrieb zu ermöglichen, werden voll automatische oder semiautomatische Melkanlagen eingesetzt, so dass eine Vielzahl von Tieren mit moderat geringem Personalaufwand gemolken werden können. Zwar bieten vollautomatisierte Melkanlagen, sogenannte Melkroboter, die Möglichkeit, das für die Erzeugung der Milch erforderliche Personal zahlenmäßig stark zu reduzieren, da im Prinzip der gesamte Melkvorgang automatisch ablaufen kann, so sind dennoch die äußerst hohen Anschaffungskosten sowie der Aufwand in Bezug auf Wartung des vollautomatisierten Systems wichtige Gesichtspunkte, die das Einführen vollautomatisierter Anlagen insbesondere in kleineren und mittleren Agrarbetrieben als ungünstig erscheinen lassen. Daher werden in vielen Betrieben semiautomatische Melkanlagen betrieben, in denen bestimmte Handlungen während des Melkvorganges manuell durchgeführt werden, wobei insbesondere das Anlegen der Melkbecher an die Zitzen der Tiere manuell erfolgt.

Der Melkvorgang selbst findet in der Regel so statt, dass durch Erzeugen eines gewissen Unterdruckes in einem Melkbecher ein Milchfluss von der Zitze in den Melkbecher in Gang gesetzt wird, von wo die ermolkene Milch dann in eine entsprechende Sammelleitung abgeführt wird. Seit der Einführung automatischer und semiautomatischer Melkanlagen in Agrarbetrieben ist viel Aufwand betrieben worden, um einen möglichst effizienten Betrieb von Melkanlagen zu gewährleisten, da es für einen dauerhaften hohen Ertrag äußerst wichtig ist, einen dem natürlichen Saugvorgang des Kalbes an dem Euter des Muttertieres nachempfundenen Melkvorgang mittels der automatischen Melkanlage auszuführen. D. h., beim automatisierten bzw. semiautomatisierten Melkvorgang soll einerseits ein geringes Maß an Eingreifen durch einen Bediener erforderlich sein, um damit den Anteil an Personalkosten in einem Agrarbetrieb gering zu halten, andererseits ist jedoch ein hohes Maß an "Natürlichkeit" des automatisierten Melkvorgangs sicherzustellen. Es zeigt sich, dass ein dauerhaft hoher Ertrag von Milchtieren in der Regel nur dann zu gewährleisten ist, wenn ein über das gesamte Jahr hinweg ein hoher Ausmelkungsgrad erreicht wird, da dann die milch produzierenden Zellen, d. h. die Alveolen, nachhaltig zu einer ständigen Produktion von Milch angeregt werden. Dazu ist es in der Regel erforderlich, gewisse physiologische Aspekte, etwa eine ausreichende Stimulation, geeignete Druckverhältnisse an der Zitze, sowie ein gewisses Maß an Hygiene einzuhalten. Somit kann bereits durch den Melkvorgang selbst die Menge und die Qualität der Milch bestimmt werden. D. h., bei einer möglichst guten Anpassung des maschinellen Melkvorgangs an die physiologischen Gegebenheiten des Milchtieres lässt sich eine dauerhafte Eutergesundheit erreichen, die wiederum die Vorraussetzung ist, langfristig einen hohen Ertrag bei hoher Qualität der Milch zu erreichen. Beispielsweise ist ein ausreichend hoher Ausmelkungsgrad nicht nur für die insgesamt erzeugte Milchmenge, sondern auch für die Qualität der Milch ein wesentlicher Aspekt, da insbesondere die Keimzahl der Milch langfristig durch einen effizienten Melkvorgang deutlich reduziert werden kann.

Neben den vielen physiologischen Aspekten, die beim maschinellen Melken zu berücksichtigen sind, gibt es jedoch auch hygienische Vorgaben, die für die Qualität der Milch entscheidend sind. Beispielsweise werden selbst in kleineren und mittleren Agrarbetrieben eine Vielzahl von Milchtieren mit dem gleichen Melkgeschirr gemolken. Hierbei ist es besonders wichtig, die Verschleppung von Keimen von einem Tier zum anderen möglichst einzuschränken oder zu verhindern, so dass ein hohes Maß an Tiergesundheit auch bei größeren Tierbeständen gewährleistet ist. Beispielsweise sieht der Gesetzgeber in den diversen Ländern entsprechende Regelungen vor, die in einer sogenannten Milchordnung verankert sind, die einen entsprechenden Hygienestandard gewährleisten sollen. Die Einhaltung dieser Hygienestandards ist jedoch nicht nur im Hinblick auf das Erfüllen der gesetzlichen Vorgaben wichtig, sondern führt langfristig auch zu einer besseren Tiergesundheit und damit auch zu einer höheren Milchleistung. Es werden daher eine Vielzahl von Systemen und Verfahren eingesetzt, um zwischen den einzelnen Melkvorgängen die Melkbecher zu reinigen und zu desinfizieren, wobei jedoch unter praxisnahen Bedingungen die Wirksamkeit dieser Einrichtungen und Verfahren z.T. sehr eingeschränkt ist. Beispielsweise ist für gewisse Reinigungsflüssigkeiten, etwa Peressigsäure, eine bestimmte Mindesteinwirkdauer erforderlich, so dass die gewünschte desinfizierende Wirkung erreicht wird. Andererseits kann ein zu lange andauernder Reinigungsprozess zu einer deutlichen Einbuße in der Gesamteffizienz der Melkanlage führen. Auch ist ein Kontakt der Reinigungsflüssigkeiten mit der abgemolkenen Milch möglichst zu vermeiden, um das Einbringen von Fremdstoffen in die Milch zu verhindern. Insbesondere bei semiautomatischen Melkanlagen ist die Effizienz und die Qualität des entsprechenden Reinigungs- bzw. Desinfiziervorganges in besonderem Maße von dem entsprechenden Bediener der Melkanlage abhängig, da in solchen Anlagen beispielsweise die Qualität und die Zusammensetzung des Desinfektionsmittels und der Reinigungsflüssigkeiten, die Einwirkdauer, und dergleichen von dem entsprechenden Bediener beeinflusst werden können. Unter solchen Bedingungen ist es häufig schwierig, die für den Melkvorgang und die Milchqualität günstigen Bedingungen einzuhalten, oder die an sich vorgegebenen gesetzlichen Auflagen werden nur unzureichend erfüllt. Beispielsweise ist im europäischen Markt eine Reinigungsprozedur nach einzelnen Melkvorgängen vorgeschrieben, in der nach dem Abnehmen der Melkbecher zunächst eine Spülung mit Wasser, so dann eine Beaufschlagung mit Peressigsäure und eine weitere Spülung mit Wasser auszuführen ist. Des weiteren ist eine gewisse Mindesteinwirkdauer der Peressigsäure zu beachten, um damit die angestrebte desinfizierende Wirkung zu erreichen. Um diese gesetzlichen Vorgaben zu verwirklichen, werden beispielsweise diverse Reinigungssysteme betrieben, die jedoch teilweise eine geringe Wirksamkeit aufweisen. Beispielsweise werden häufig in größeren Agrarbetrieben sogenannte Schleppbäder eingesetzt, in denen die Melkbecher nach dem Melkvorgang durch entsprechende Flüssigkeitsbäder gezogen werden, so dass zunächst Melkbecher durch ein Wasserbad gezogen werden, woran sich ein Peressigsäurebad anschließt und nachfolgend in der Regel ein Wasserbad durchlaufen wird. In einer derartigen Anordnung kann es jedoch zu einer starken Kontamination der Reinigungsflüssigkeiten selbst kommen, da insbesondere nach mehreren Reinigungsvorgängen entsprechende Verunreinigungen, die sich an den Außenseiten der Melkbecher anlagern können, in die entsprechenden Reinigungsbäder eingeführt werden. Die damit stetig anwachsende Belastung der Reinigungsflüssigkeiten führen damit unter Umständen zu einer stark reduzierten Desinfektionswirkung oder können sogar zu einer höheren Keimbelastung führen. Andererseits sind durch ein häufiges Austauschen der Reinigungsflüssigkeiten ein hoher zusätzlicher Arbeitsaufwand sowie eine große Menge an Desinfektionsmitteln erforderlich. In anderen halbautomatischen Melkanlagen wird der entsprechende Reinigungsvorgang manuell ausgeführt, so dass Wirksamkeit und Dauer des entsprechenden Reinigungsprozesses von der entsprechenden Person, den momentan herrschenden Bedingungen, und dergleichen abhängen können. Somit ist eine dauerhaft hohe Qualität und Zuverlässigkeit des entsprechenden Reinigungsprozesses unter Umständen nicht gewährleistet, insbesondere wenn eine hohe Arbeitsbelastung sowie ein unterschiedlicher Ausbildungsgrad des entsprechenden Fachpersonals anzutreffen sind.

Es besteht somit ein Bedarf beim automatisierten oder halbautomatisierten Melkvorgang, die Reinigung bzw. Desinfektion von Melkbechem so zu verbessern, dass eine hohe Effizienz und eine gleichbleibende Qualität des Reinigungsvorgangs erreicht wird.

Gemäß einem Aspekt der vorliegenden Erfindung wird diese Aufgabe durch eine Reinigungsanlage für Melkbecher mit den Merkmalen des Anspruchs 1 gelöst.

Durch die efindungsgemäß ausgebildete Reinigungsanlage ist es somit möglich, zumindest zwei unterschiedliche Reinigungsfluide durch eine Ausgabeeinrichtung in die Melkbecher einzubringen, so dass damit die Möglichkeit geschaffen ist, eine effiziente Reinigungs- bzw. Desinfektionssequenz durchzuführen. Die Zuführung zweier Reinigungsfluide mittels einer einzelnen Fluidausgabeeinrichtung erlaubt damit ein hohes Maß an Effizienz und Reproduzierbarkeit der Zuführung eines entsprechenden Reinigungsfluids, beispielsweise Wasser, Peressigsäure, und dergleichen, da jeder Melkbecher an einer bestimmten Reinigungsposition angeordnet werden kann, an der dann die Reinigungsfluide entsprechend einer gewünschten Sequenz und mit einer gewünschten Menge und Einwirkdauer zugeführt werden können. Somit wird durch das Vorsehen einer Fluidausgabeeinrichtung, die unterschiedliche Reinigungsfluide in dem Melkbecher einführen kann, ein hohes Maß an Flexibilität für das Einrichten einer geeigneten Reinigungs- bzw. Desinfektionssequenz erreicht, wobei die erforderlichen Vorgänge für die Handhabung der Melkbecher und der zur Beaufschlagung mit Reinigungsfluiden erforderliche Raumbedarf gering gehalten wird.

In einer weiteren vorteilhaften Ausführungsform ist eine mit der Fluidausgabeeinrichtung verbundene Zufuhreinrichtung mit einer ersten Speiseleitung, die über eine erste Ventileinrichtung mit der ersten Fluidquelle in Verbindung steht, und einer zweiten Speiseleitung, die über eine zweite Ventileinrichtung mit der zweiten Fluidquelle in Verbindung steht, vorgesehen.

Durch diese Ausgestaltung der Reinigungsanlage ist eine individuelle Steuerung der Menge der einzelnen Reinigungsflüssigkeiten und/oder Gase gewährleistet, wobei durch die entsprechenden Speiseleitungen und Ventileinrichtungen eine gewünschte steuerbare Entkopplung von der Ausgabeeinrichtung möglich ist. Damit wird aber auch eine entsprechende Rückwirkung der Fluidausgabeeinrichtung auf die entsprechenden Fluidquellen deutlich reduziert, so dass dort die Integrität der Reinigungsfluide im Hinblick auf eine mögliche Kontamination gewährleistet ist, während auch gleichzeitig die Möglichkeit geschaffen ist, eine erforderliche Mindestmenge an Reinigungsfluid pro Sequenz vorzusehen, ohne dass der Reinigungsvorgang, durch eine variierende Zusammensetzung der Reinigungslösung oder eine schwankende Flüssigkeitsmenge beeinflusst werden. Auf diese Weise können stets konstante Betriebsbedingungen für die Reinigungssequenz aufrecht erhalten werden.

In einer weiteren vorteilhaften Ausführungsform weist die Fluidausgabeeinrichtung eine Auslassöffnung auf, die von der ersten und der zweiten Fluidquelle gespeist werden kann. Mit diesem Aufbau kann der Volumenbedarf der Fluidausgabeeinrichtung sowie deren Komplexität sehr gering bleiben, da eine einzelne Auslassöffnung, beispielsweise in Form einer Einspritzdüse, etc., für mehrere Arten an Reinigungsfluiden verwendet werden kann. Gleichzeitig ergibt sich die Möglichkeit, eines der Reinigungsfluide, beispielsweise in Form von Wasser, zur Reinigung der Auslassöffnung zu verwenden, um damit bei Bedarf Reste des Desinfektionsmittels, beispielsweise Peressigsäure, effizient aus dem Bereich der Auslassöffnung zu entfernen, wenn beispielsweise die Reinigungsanlage selbst zu reinigen ist.

In einer weiteren anschaulichen Ausführungsform weist die Fluidausgabeeinrichtung eine erste Auslassöffnung auf, die von der ersten Fluidquelle gespeist werden kann, und eine zweite Auslassöffnung, die von der zweiten Fluidquelle gespeist werden kann. Auf diese Weise ist ein hohes Maß an Flexibilität bei der Gestaltung der Reinigungssequenz gewährleistet, da beide Reinigungsfluide unabhängig voneinander in beliebiger Reihenfolge, Zeitdauer und Menge in den Melkbecher eingeführt werden können. Dabei können die Auslassöffnungen in geeigneter Weise so angeordnet werden, dass für beide Reinigungsfluide eine effizient Benetzung des Melkbecherinnerraums erreicht werden kann. In einigen anschaulichen Ausführungsformen werden mehrere entsprechende Auslassöffnungen vorgesehen, wobei ein Satz der Auslassöffnungen durch die erste Fluidquelle gespeist wird, während ein anderer Satz an Auslassöffnungen durch die zweite Fluidquelle gespeist wird. Dabei können sowohl die Anordnung als auch die Dimensionierung der entsprechenden Auslassöffnungen geeignet eingestellt werden, um damit eine gewünschte Art der Benetzung und eine Eindringtiefe in den Melkbecher zu erreichen.

In einer weiteren vorteilhaften Ausführungsform weist die Reinigungsanlage ferner eine Steuereinrichtung auf, die ausgebildet ist, die Zufuhr des ersten und des zweiten Reinigungsfluids zur Fluidausgabeeinrichtung zu steuern. Durch das Vorsehen der Steuereinrichtung können die Effizienz und der Automatisierungsgrad der entsprechenden Reinigungs- bzw. Desinfektionssequenz auf sehr flexible Art und Weise gehandhabt werden. Beispielsweise können in der Steuereinrichtung entsprechend vorgegebene zeitliche Abläufe implementiert sein, um damit in präziser Weise einen entsprechenden Reinigungsprozess reproduzierbar nach jedem Melkvorgang durchzuführen. Auf diese Weise kann das hohe Maß an Variabilität, wie sie durch bedienergestützte Reinigungssequenzen auftreten, deutlich reduziert werden, wobei gleichzeitig die entsprechenden Bedingungen in den einzelnen Reinigungsprozess oder über längere Betriebsphasen hinweg bei Bedarf den aktuellen Gegebenheiten anzupassen. Wenn z.B. eine höhere Kontamination der Melkbecher erwartet oder festgestellt wird, kann darauf durch Abrufen einer geeigneten Sequenz reagiert werden, wobei eine entsprechende Reaktion auf Grundlage reproduzierbarer Steuenrngsabläufe erfolgt.

In einer vorteilhaften Ausführungsform ist die Steuereinrichtung ausgebildet, das Zuführen des ersten und des zweiten Reinigungsfluids zeitlich aufeinanderfolgend zu veranlassen. Wie bereits erläutert ist, ist häufig eine durch gesetzliche Bestimmungen festgelegte Reihenfolge des Zuführens von mehreren Reinigungsfluiden erforderlich, so dass ein entsprechender Zeitablaufplan in der Steuereinrichtung eingerichtet werden kann. Insbesondere durch die zeitlich sequenzielle Ausgabe der verschiedenen Reinigungsfluide kann zum einen eine effiziente Desinfizierung erreicht werden, wobei gleichzeitig die entsprechenden Mengen der Reinigungsfluide in präzise Weise reproduzierbar bereitgestellt werden können. So kann beispielsweise durch die zeitlich aufeinanderfolgende Zuführung des ersten und des zweiten Reinigungsfluids nicht nur die Menge in geeigneter Weise dosiert werden, sondern es kann auch die jeweilige Einwirkdauer in geeigneter Weise gesteuert werden, so dass beispielsweise eine Reinigungssequenz in der Steuereinrichtung eingerichtet sein kann, die das Zuführen von Wasser, das anschließende Zuführen eines Desinfektionsmittels, etwa Peressigsäure mit einer entsprechend eingestellten Einwirkdauer, und ein nachfolgendes Zuführen von Wasser zuverlässig und reproduzierbar gewährleistet, wobei insgesamt eine geringe Menge an Reinigungsfluid ausreichend ist und der Platzbedarf für die entsprechende Reinigungssequenz gering bleibt.

Gemäß Anspruch 1 ist die Halterung zur Aufnahme eines Teils des Melkbechers in einer Kammer vorgesehen, die ausgebildet ist, einen vorgegebenen Fluidpegel zumindest in einer vorbestimmten Betriebsphase aufzunehmen bzw. zu halten. Durch das Vorsehen der entsprechenden Kammer kann die Effizienz der Reinigungsfluide sowie deren Verbrauch weiter verbessert werden, da zumindest in einigen Betriebsphasen des Reinigungsprozesses ein geeigneter Flüssigkeitspegel eingestellt und auch beibehalten werden kann, so dass entsprechend benetzte Bereiche sehr intensiv mit dem Reinigungsfluid wechselwirken können. Auf diese Weise kann das entsprechende Reinigungsfluid mit hoher Effizienz auf den Melkbecher einwirken, wobei in einigen Ausführungsformen entsprechende Mittel vorgesehen sind, um bei Bedarf den Fluidpegel abzusenken oder das entsprechende Fluid vollständig zu entfernen, obwohl dennoch die erforderlichen Mengen an Reinigungsfluiden im Vergleich zu vielen konventionellen Verfahren gering bleiben und auch eine entsprechende Kontamination der Reinigungsfluide zwischen den einzelnen Reinigungssequenzen gering bleibt.

Vorzugsweise ist eine Pegelbegrenzungseinrichtung vorgesehen, die geeignet ist, den Fluidpegel in der Kammer auf einen vorbestimmten maximalen Pegel zu begrenzen. Auf diese Weise können die Prozessbedingungen in flexibler Weise reproduzierbar eingestellt werden, ohne dass dadurch eine erhöhte Komplexität der Melkanlage erforderlich ist. Beispielsweise kann während gewisser Phasen der Reinigungssequenz ein definiertes Maß an Spülflüssigkeit, beispielsweise Wasser, wünschenswert sein, wobei dennoch durch die Begrenzungseinrichtung sichergestellt ist, dass höchstens eine maximal gewünschte Menge in der entsprechenden Kammer vorhanden ist. Vorteilhafterweise kann die Pegelbegrenzungseinrichtung so gestaltet sein, dass der in der jeweiligen Betriebsphase maximale Pegel einstellbar ist, so dass je nach Betriebsweise der entsprechende Benetzungsgrad und die zu verwendende Flüssigkeitsmenge durch den aktuellen maximalen Pegel vorgegeben sind. Wenn z.B. ein höherer Grad an Kontamination vorhanden ist, kann generell die Pegelhöhe beim Spülen und Desinfizieren erhöht werden, der dann bei normaler Betriebsweise wieder abgesenkt werden kann, so dass der Verbrauch an Reinigungsfluid wieder reduziert werden kann.

In einer weiteren vorteilhaften Ausführungsform ist eine Fluidentfeuchtungseinrichtung vorgesehen, die ausgebildet ist, den Anteil des ersten und/oder des zweiten Fluids in dem Melkbecher aktiv zu reduzierten. Typischerweise ist es vorteilhaft, nach dem Einbringen des Reinigungsfluids und nach einer gewünschten Einwirkdauer das entsprechende Reinigungsfluid effizient aus dem Melkbecher zu entfernen, um damit eine gegenseitige Beeinflussung der einzelnen Reinigungsfluide sowie eine mögliche Einwirkung auf die Milch zu reduzieren. Durch die erfindungsgemäße Fluidentfeuchtungseinrichtung kann der Vorgang des Abführens von Reinigungsfluiden aktiv unterstützt werden, indem beispielsweise geeignete Mechanismen, etwa ein Gasstrom, mechanische Bewegung, und dergleichen, eingesetzt werden, um den Anteil an Restfluid in dem Melkbecher zu verringern.

In einer vorteilhaften Ausführungsform weist die Fluidentfeuchtungseinrichtung eine Aktuatoreinrichtung auf, die ausgebildet ist, den Melkbecher nach Beaufschlagen mit dem ersten oder zweiten Reinigungsfluid in Bewegung zu versetzen. Durch diese mechanische Bewegung kann somit in sehr effizienter Weise die Benetzung mit dem zuvor eingebrachten Reinigungsfluid verringert werden, so dass der nächste Prozessschritt in dem Vorgang mit geringer Beeinflussung durch das vorher eingebrachte Fluid ausgeführt werden kann. Beispielsweise kann die entsprechende Aktuatorvorrichtung ausgebildet sein, den Melkbecher aus der Halterung zu lösen und in eine schwingungsähnliche Bewegung zu versetzen, so dass das Abtropfen des Reinigungsfluids deutlich unterstützt wird.

In anderen Ausführungsformen kann die Entfeuchtungseinrichtung den Melkbecher mit Luft oder Gas, etwa Stickstoff, beaufschlagen, so dass der Anteil an Fluid im Melkbecher vor dem nächsten Schritt reduziert wird. Somit kann durch eine aktive Verringerung des Fluidanteils die Zeitdauer des Gesamtvorgangs deutlich reduziert werden, ohne dabei die Effizient zu beeinträchtigen.

In einer weiteren vorteilhaften Ausführungsform umfasst die Reinigungsanlage ferner eine Sprüheinrichtung, die ausgebildet ist, zumindest einen Bereich der Außenseite eines oder mehrerer Melkbecher mit einem Reinigungsmittel zu benetzen. Mit einer entsprechenden zusätzlichen Sprüheinrichtung, die beispielsweise mit Wasser oder einem anderen geeigneten Reinigungsmittel betrieben werden kann, gelingt es damit auch Verschmutzungen an der Außenseite der Melkbecher zu reduzieren, ohne dass dabei eine deutliche Kontamination des ersten und des zweiten Reinigungsfluids, die durch die Ausgabeeinrichtung in den Innenraum des Melkbechers eingeführt werden, stattfindet. Auf diese Weise gelingt es, eine sehr effiziente Gesamtreinigung und Desinfektion der Melkbecher in den Zwischenphasen des Melkvorgangs durchzuführen, wobei die Außenreinigung, die Innenreinigung und die Desinfektion in einem sehr kleinen Volumen unter genau definierten Bedingungen stattfinden.

In einer weiteren vorteilhaften Ausführungsform ist eine Positionssensoreinrichtung vorgesehen, die ein Signal beim Positionieren des Melkbechers in der Halterung bereitstellt. Auf diese Weise kann eine effiziente Steuerung sowohl des Positioniervorgangs selbst, sofern dieser automatisch ausgeführt wird, als auch für die weitere Reinigungssequenz erreicht werden. Beispielsweise kann das Signal der Sensoreinrichtung die aktuelle Position des Melkbechers bezeichnen, beispielsweise kann das Signal angeben, ob der Melkbecher eine gewünschte Betriebsposition in der Reinigungsanlage erreicht hat.

In einer weiteren vorteilhaften Ausführungsform ist die Positionssensoreinrichtung mit der Steuereinrichtung verbunden, wobei die Steuereinrichtung die Zufuhr des ersten und/oder des zweiten Reinigungsfluids in Abhängigkeit des Signals steuert. So kann durch das entsprechende Signal beispielsweise die Zufuhr des ersten Reinigungsfluids zum geeigneten Zeitpunkt in Gang gesetzt werden, so dass die Benetzung des Innenraums des Melkbechers in zuverlässiger und reproduzierbarer Weise erreicht wird, ohne dass unnötig ein Teil des Fluids abläuft oder in der Reinigungsanlage ohne große Wirkung verteilt wird.

Gemäß Anspruch 1 ist eine Vakuumsansteuereinrichtung vorgesehen, die ausgebildet ist, einen Betriebsunterdruck im Melkbecher zu steuern. Durch die Vakuumansteuereinrichtung ist es möglich, die Reinigungssequenz in geeigneter Weise mit dem Betriebszustand des Melkbechers zu koordinieren. Beispielswiese ist es typischerweise notwendig, den Betriebsunterdruck, der während des Melkens im Melkbecher aufgebaut wird, zu unterbrechen, um damit die Melkbecher nach erfolgtem Melkvorgang von den Zitzen abzunehmen. Eine dauerhafte Deaktivierung des Melkunterdrucks im Bereich des Melkbechers kann jedoch zu einem Ausströmen von Restmilch führen, wobei diese dann unkontrolliert verteilt wird. Auf Grund der Vakuumansteuereinrichtung ist es jedoch möglich, das Betriebsvakuum gezielt wieder herzustellen, um damit ein ungesteuertes Ausströmen der Restmilch zu verhindern, solange der Melkbecher noch nicht in geeigneter Weise in der Halterung positioniert ist. Die Vakuumansteuereinrichtung ist insbesondere vorteilhaft im Zusammenwirken mit entsprechenden Halteeinrichtungen für Melkbecher, in denen diese manuelle oder automatisch von den Zitzen abgenommen und geeignet gehalten werden, ohne dass ein Abknicken der entsprechenden Milchschläuche für eine Deaktivierung des Melkvakuums im Bereich der Melkbecher sorgt. In diesem Falle kann die Vakuumansteuereinrichtung geeignete Druckbedingungen nach dem Abnehmen der Melkbecher bzw. nach dem automatischen Abfallen der Melkbecher einstellen, so dass das Ausströmen der Restmilch im Wesentlichen auf den Bereich der Halterung beschränkt ist, so dass die Restmilch in definierter Weise beispielsweise mittels Wasser abgeführt werden kann. Vorteilhafterweise ist die Vakuumansteuereinrichtung ausgebildet, den Betriebsdruck im Melkbecher in Abhängigkeit des Signals der Positionssensoreinrichtung zu steuern. Auf diese Weise kann zuverlässig sichergestellt werden, dass zumindest der Hauptanteil der Restmilch in der Halterung ausströmt, unabhängig davon, wie lange das Positionieren der einzelnen Melkbecher in der Halterung dauert.

In einer weiteren Ausführungsform weist die Reinigungsanlage ferner eine Transporteinrichtung auf, die ausgebildet ist, die Melkbecher automatisch in der Halterung zu positionieren. Auf diese Weise gelingt selbst in halbautomatischen Melkanlagen, in denen ein gewisses Maß an manueller Bedienung erforderlich ist, sehr genau definierte Betriebsbedingungen während der Reinigungssequenzen zwischen den einzelnen Melkvorgängen einzuhalten. In anderen Ausführungsformen ist die Reinigungsanlage so gestaltet, dass auch bei einer manuellen Zuführung der Melkbecher eine entsprechende geeignete Positionierung der einzelnen Melkbecher gewährleistet ist. Dazu kann eine im Wesentlichen trichterförmige Öffnung so vorgesehen sein, dass bei Kontakt der Melkbecher mit den entsprechenden trichterförmigen Öffnungen eine geeignete Zentrierung der Melkbecher und somit eine Positionierung in der Halterung erfolgt. Somit kann auch bei einer rein manuellen Zuführung der Melkbecher zur Reinigungsanlage aufgrund der genauen Anordnung an der Reinigungsposition ein hohes Maß an Stabilität hinsichtlich der Betriebsbedingungen und der Reinigungssequenz erreicht werden.

Gemäß einem weiteren Aspekt der vorliegenden Erfindung wird eine Melkanlage bereitgestellt, wobei diese ein Melkgeschirr mit mehreren Melkbechern und eine Vakuumeinrichtung zur Bereitstellung eines Unterdrucks in dem Melkgeschirr zum Absaugen von Milch bereitstellt. Des weiteren ist eine Milchsammeleinrichtung vorgesehen, die mit dem Melkgeschirr und der Vakuumeinrichtung verbunden ist. Es ist ferner eine Reinigungsanlage ist vorgesehen, um Melkbecher zu reinigen, wobei die Reinigungsanlage gemäß Anspruch 1 ausgebildet ist.

Damit wird auch in der erfindungsgemäßen Melkanlage der Vorteil erreicht, dass durch Bereitstellen zweier Reinigungsfluide mittels einer einzelnen Ausgabeeinrichtung ein hohes Maß an Zuverlässigkeit und Stabilität der Betriebsbedingungen erreicht wird, wie dies zuvor bereits beschrieben ist. In einer weiteren vorteilhaften Ausführungsform ist ferner eine Halteeinrichtung für die Melkbecher vorgesehen, die ausgebildet ist, die Melkbecher für das manuell Anlegen der Melkbecher für den Melkvorgang zu positionieren. Zu diesem Zweck kann die Halteeinrichtung so gestaltet sein, dass die einzelnen Melkbecher im Wesentlichen horizontal angeordnet sind, so dass Melkbecher individuell manuell an eine Zitze des Tieres anzulegen sind. Durch diese Halteeinrichtung sind die Melkbecher nach Ende eines Melkvorgangs auch in geeigneter Weise positioniert, so dass sie sehr effizient in die entsprechende Reinigungsanlage überführt und dort in der entsprechenden Halterung positioniert werden können. Beispielsweise kann eine zuvor beschriebene Transporteinrichtung vorgesehen und mit der Halteeinrichtung verbunden sein, um damit die Halteeinrichtung nach einem Melkvorgang relativ zu der Reinigungsanlage so zu positionieren, dass die Melkbecher automatisch in der Halterung der Reinigungsanlage platziert werden. Auf diese Weise kann ein hohes Maß an Automatisierung selbst in semiautomatischen Melkanlagen erreicht werden, wobei dann der gesamte Vorgang nach dem Abnehmen der Melkbecher im Wesentlichen automatisiert und damit standardisiert ist, so dass gleichbleibende Bedingungen und damit eine gleichbleibend hohe Effizienz des Reinigungs- bzw. Desinfiziervorgangs erreicht wird.

Vorteilhafterweise ist dabei die Vakuumansteuereinrichtung, wie sie beispielsweise zuvor beschrieben ist, so ausgebildet, dass der Betriebsunterdruck bei der Positionierung der Melkbecher aktiv bleibt, bis diese in der Halterung der Reinigungsanlage positioniert sind. Auf diese Weise kann ein Ausströmen der Restmilch deutlich reduziert werden, so dass die einzelnen Komponenten der Melkanlage nur in sehr geringer Weise durch Restmilch benetzt werden, so dass die Gefahr einer Keimbildung in der Melkanlage deutlich geringer ist.

Gemäß einem weiteren Aspekt der vorliegenden Erfindung wird ein Verfahren zur Reinigung von Melkbechern bereitgestellt, wobei das Verfahren das zeitlich aufeinanderfolgende Benetzen eines Teils des Innenraums der Melkbecher mit mindestens zwei unterschiedlichen Reinigungsfluiden in einem für jedes der zwei unterschiedlichen Reinigungsfluide gleichen Reinigungsbereich nach einem ersten Melkvorgang und das Verwenden der gereinigten Melkbecher für einen zweiten Melkvorgang umfasst.

Wie zuvor bereits erläutert ist, kann durch das Bereitstellen zweier unterschiedlicher Reinigungsfluide am gleichen Reinigungsort eine deutliche Verbesserung im Hinblick auf Effizienz und Durchsatz erreicht werden, da zum einen ein geringes Volumen der Reinigungsanlage und damit kurze Wege bei der Handhabung der Melkbecher ausreichend sind, da die für die Zwischendesinfektion erforderlichen Mittel an einer Position bereitgestellt werden können, während andererseits auch die Möglichkeit geschaffen wird, sehr konstante Betriebsbedingungen zu schaffen. Dies ist insbesondere vorteilhaft im Zusammenhang mit Melktechniken, in denen die Melkbecher beim Melkvorgang manuell angesetzt werden, so dass in derartigen Anlagen einerseits die Nachteile einer extrem hohen Automatisierung und der damit verknüpften Investitions- und Unterhaltungskosten reduziert werden können, wobei dennoch ein hohes Maß an Automatisierung, insbesondere im Hinblick auf eine effiziente Zwischendesinfektion der Melkbecher gelingt. So ist es beispielsweise in sehr effizienter Weise möglich, bei geringem Platzbedarf eine erste Menge eines ersten Reinigungsfluids, eine zweite Menge des zweiten Reinigungsfluids und danach eine dritte Menge des ersten Reinigungsfluids zuzuführen, um damit eine sehr effiziente Desinfektion der Melkbecher zu erreichen, wobei dies insbesondere in Einklang mit den jeweiligen geltenden Bestimmungen ausgeführt werden kann. Ferner gelingt es, eine sehr effiziente Desinfektion zu gewährleisten, wobei die Menge der aufzuwendenden Desinfektionsmittel pro Reinigungsvorgang relativ gering ist. Beispielsweise sind etwa 0,1 bis 0,5 Liter eines Reinigungsfluids, etwa beispielsweise Peressigsäure ausreichend, um vier Melkbecher einer üblichen Melkanlage gemäß den Vorgaben der Milchverordnung zu behandeln. Eine entsprechende Reinigungssequenz kann in 30 bis 60 Sekunden ausgeführt werden, so dass der Anteil der Zwischendesinfektion am Gesamtmelkvorgang gering bleibt.

Weitere vorteilhafte Ausführungsformen, Aufgaben und Vorteile der vorliegenden Erfindung gehen aus der weiteren detaillierten Beschreibung sowie aus den angefügten Patentansprüchen hervor.

Weitere anschauliche Ausführungsformen werden nunmehr detaillierter mit Bezugnahme zu den begleitenden Zeichnungen beschrieben, in denen:

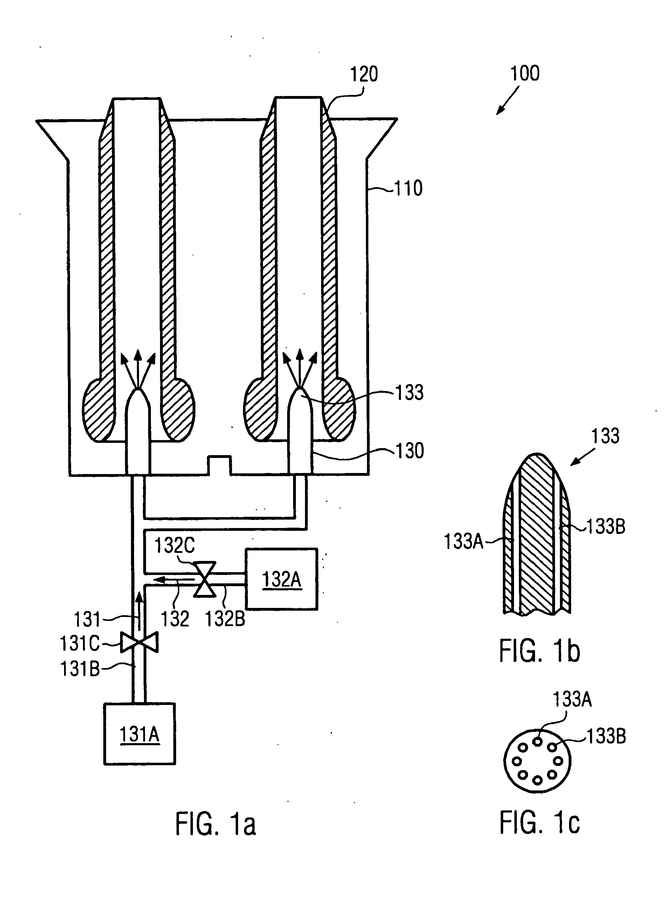

Fig. 1a schematisch eine Reinigungsanlage mit einer Halterung zur Aufnahme von Melkbechern und einer Ausgabeeinrichtung für die Beaufschlagung des Innenraums der Melkbecher mit verschiedenen Reinigungsfluiden gemäß einer anschaulichen Ausführungsform zeigt;

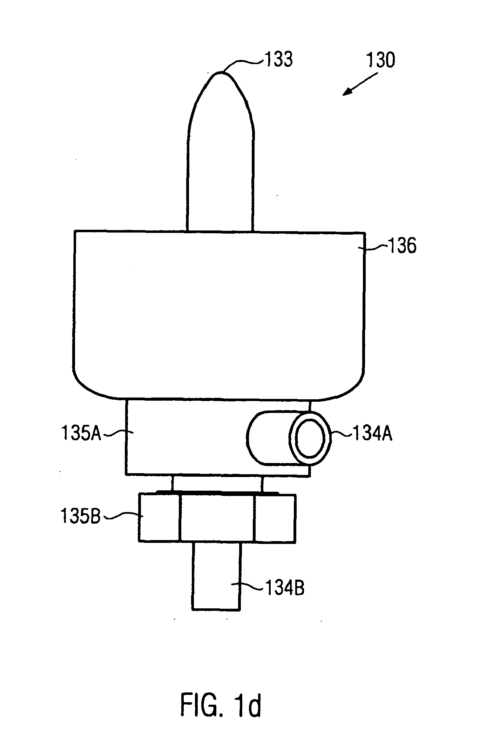

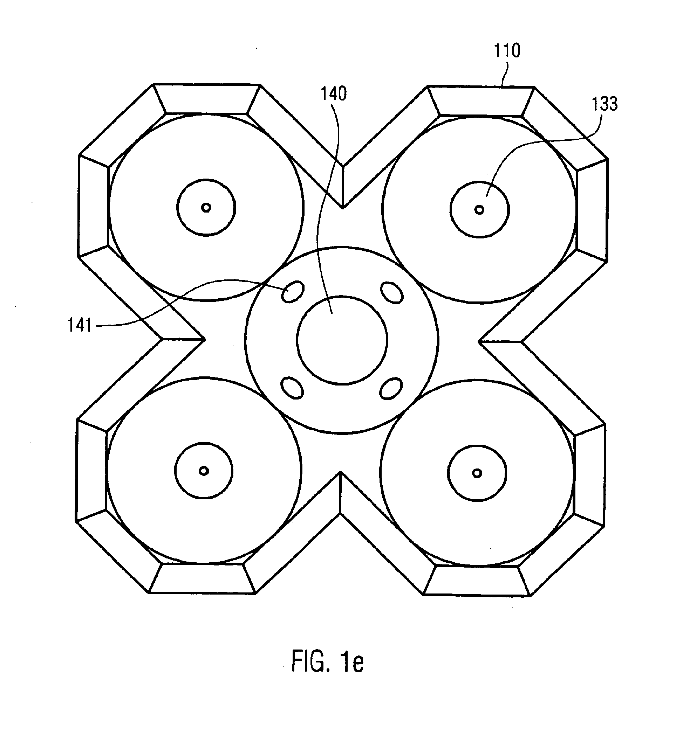

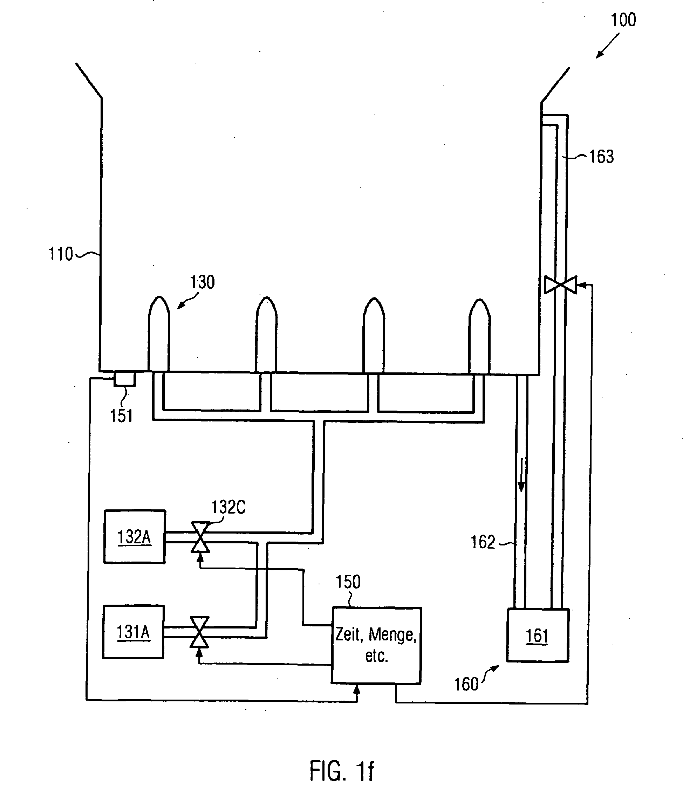

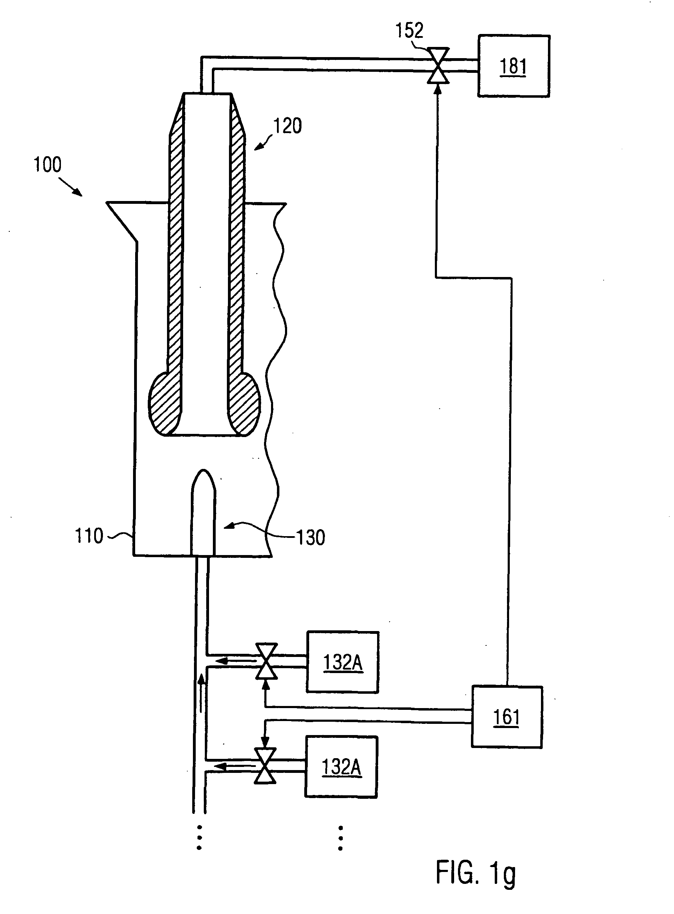

Fig. 1 b eine Teilansicht einer Auslassdüse mit mehreren Auslassöffnungen gemäß einer anschaulichen Ausführungsform zeigt;
Fig. 1 c eine Draufsicht der Düse aus Fig. 1 b zeigt;
Fig. 1 d eine schematische Darstellung einer Fluidausgabeeinrichtung mit Teilen entsprechender Speiseleitungen gemäß einer anschaulichen Ausführungsform zeigt;
Fig. 1e schematisch eine Draufsicht der Reinigungsanlage aus Fig. 1a gemäß einer anschaulichen Ausführungsform zeigt, wobei eine Sprüheinrichtung vorgesehen ist, um Außenbereiche der Melkbecher zu benetzen;
Fig. 1f schematisch eine Reinigungsanlage mit Steuereinrichtung und einer Einrichtung für die Begrenzung des Fluidpegels gemäß weiterer anschaulicher Ausführungsformen zeigt;
Fig. 1g schematisch eine Reinigungsanlage zeigt, in der eine Vakuumansteuereinrichtung zur Steuerung des Betriebsunterdrucks im Melkbecher zeigt; und
Fig. 2a und 2b schematisch eine Melkanlage mit einer erfindungsgemäßen Reinigungsanlage zeigen, wobei eine Transporteinrichtung vorgesehen ist, um in automatisierter Weise Melkbecher in der Reinigungsanlage zu positionieren.

Fig. 1 a zeigt schematisch eine Reinigungsanlage 100, in der eine Halterung 110 vorgesehen ist, die dazu ausgebildet ist, einen oder mehrere Melkbecher 120 aufzunehmen und während einer Reinigungssequenz auf der Grundlage mindestens zweier unterschiedlicher Reinigungsfluide in Position zu halten. Die Halterung 110 ist in einer anschaulichen Ausführungsform in Form einer Kammer vorgesehen, in der bei Bedarf ein gewisser Flüssigkeitspegel, beispielsweise in Form von Wasser, etc., gehalten werden kann. Die Halterung 110 ist ferner vorteilhafterweise so ausgebildet, dass die Melkbecher 120 im Wesentlichen mit ihrem gesamten Volumen, d.h., über ihre gesamte Längehinweg, aufgenommen werden können, so dass bei Bedarf auch eine effiziente Spülung und Benetzung im Wesentlichen der gesamten Außenfläche der Melkbecher 120 vorgenommen werden kann, wenn dies erforderlich ist. Beispielsweise kann es während gewisser Betriebsphasen, beispielsweise bei einer Endreinigung nach Beendigung einer Vielzahl einzelner Melkvorgänge, vorteilhaft sein, entsprechende Verschmutzungen an der gesamten Außenfläche der Melkbecher 120 zu entfernen. In anderen Ausführungsformen kann die Halterung 110 so ausgebildet sein, dass zumindest der Innenraum der Melkbecher 120 für eine geeignete Reinigung und Desinfizierung zugänglich ist, ohne dass im Wesentlichen der gesamten Außenbereich der Melkbecher 120 von der Halterung 110 umschlossen wird.

Ferner sind in der Reinigungsanlage 100 eine oder mehrere Fluidausgabeeinrichtungen 130 vorgesehen, die so ausgebildet und angeordnet sind, dass zumindest ein erstes Reinigungsfluid 131 und ein zweites Reinigungsfluid 132, die aus entsprechenden Fluidquellen 131a, 132a erhalten werden, ausgegeben werden können. D. h., die eine oder die mehreren Ausgabeeinrichtungen 130 können zumindest die beiden Reinigungsfluide 131, 132 in die Melkbecher 120, zumindest in einen unteren Bereich davon, einführen. Auf diese Weise kann in sehr platzsparender Weise der Melkbecher 120 an einer einzelnen vorgegebenen Reinigungsposition mit unterschiedlichen Reinigungsfluiden beaufschlagt werden. Dazu ist in der dargestellten Ausführungsform jede der Ausgabeeinrichtungen 130 mit einer entsprechenden Auslassöffnung 133 versehen, die über eine entsprechende Speiseleitung 132b und ein zugehöriges Ventil 132c mit der Fluidquelle 132a verbunden werden kann. In ähnlicher Weise kann die Auslassöffnung 133 über eine entsprechende Speiseleitung 131b und eine entsprechende Ventileinrichtung 131c mit der Fluidquelle 131a verbunden werden, wobei eine entsprechende Einleitung der Reinigungsfluide 132, 131 entsprechend den Anforderungen des Reinigungsprozesses stattfinden kann. Durch Betätigung der entsprechenden Ventilelemente 132c, 131c ist somit die Menge und der Zeitpunkt für die Benetzung des Innenraums der Melkbecher 130 wählbar, wobei dies in automatisierter Weise erfolgen kann, wie dies nachfolgend detaillierter beschrieben ist, oder bei Bedarf auch manuell durchführbar ist. Auch kann die Effizienz, beispielsweise im Hinblick auf die Eindringtiefe der entsprechenden Reinigungsflüssigkeit in den Melkbecher 120 in geeigneter Weise gesteuert werden, indem der Druck in den Fluidquellen 132a, 131a und/oder die Funktion der Ventileinrichtungen 132c, 131c und/oder die Größe und Form der Auslassöffnung 133 geeignet gewählt werden. Beispielsweise kann die Auslassöffnung 133 in Form einer Düse vorgesehen werden, wobei durch Einstellen der Druckverhältnisse in den entsprechenden Fluidquellen 132a, 131 a eine Benetzung der Innenflächen des Melkbechers 120 erreicht werden kann. Bei Bedarf und bei entsprechender Ausbildung der Halterung 110, beispielsweise in Form einer Wanne mit entsprechenden Wänden und einem steuerbaren Ablauf für Flüssigkeit in der Wanne, kann auch ein geeigneter Flüssigkeitspegel während gewisser Betriebsphasen in der Halterung 110 eingestellt werden, wenn dies gewünscht ist.

Fig. 1 b zeigt eine schematische Querschnittsansicht eines Teils der Ausgabeeinrichtung 130, wobei eine oder mehrere erste Auslassöffnungen 133a und eine oder mehrere zweite Auslassöffnungen 133b vorgesehen sind, die jeweils über die entsprechenden Ventileinrichtungen 132c, 131c mit den entsprechenden Fluidquellen 131 a, 132a in Verbindung stehen. Auf diese Weise kann eine wechselseitige Beeinflussung der entsprechenden Reinigungsfluide auch innerhalb der Ausgabeeinrichtung 133 bei Bedarf deutlich verringert werden.

Fig. 1 c zeigt eine schematische Draufsicht der Ausgabeeinrichtung 133, wobei mehrere erste Auslassöffnungen 133a und mehrere zweite Auslassöffnungen 133b so angeordnet sind, dass eine möglichst isotrope Benetzung des Melkbechers 120 für beide Arten von Fluiden gegeben ist. D. h., in der dargestellten Ausführungsform sind in Umfangsrichtung abwechselnd eine erste Öffnung 133a und eine zweite Öffnung 133b jeweils benachbart zueinander vorgesehen, so dass eine gleichförmige Ausgabe der Fluide 131, 132 erreicht wird.

Fig. 1d zeigt schematisch eine Seitenansicht der Ausgabeeinrichtung 130 gemäß einer Ausführungsform, in der entsprechende Anschlüsse 134a, 134b vorgesehen sind, um über entsprechende Schraubverbindungen 135a, 135b flüssigkeitsdicht die Zuführungen 134a, 134b mit der Austrittsöffnung 133 zu verbinden. Beispielsweise kann der Anschluss 134a mit dem Schraubanschluss 135a eine flüssigkeitsdichte Verbindung mit einem Basiskörper, in welchem die Auslassöffnung 133 und der entsprechende Kanal ausgebildet sind, so herstellen, das über geeignete positionierte Eintrittsöffnungen (nicht gezeigt) im Basiskörper das Fluid zur Auslassöffnung 133 gelangen kann. Ferner ist in der gezeigten Ausführungsform eine Wanne bzw. Kammer 136 vorgesehen, die vorteilhafterweise auch eine gewisse Menge an Reinigungsfluid halten kann, wenn eine ständige Benetzung entsprechender Bereiche des Melkbechers 120 erwünscht ist. In der gezeigten Ausführungsform sind die entsprechenden Elemente mechanisch durch Schraubverbindungen und entsprechende Dichtungen miteinander verbunden, so dass bei Bedarf die Einzelteile demontiert und beispielsweise gereinigt werden können. In anderen anschaulichen Ausführungsformen können eine oder mehrere der beschriebenen Komponenten als Einheit vorgesehen werden, so dass eine entsprechende maschinelle Fertigung kostengünstig ausgeführt werden kann.

Fig. 1e zeigt schematisch eine Draufsicht der Reinigungsanlage 100, wobei ihre Ausgabeeinrichtungen 130 in der Halterung 110 vorgesehen sind, um damit beispielsweise vier Melkbecher gleichzeitig aufzunehmen. Des weiteren ist in der gezeigten Ausführungsform eine Sprüheinrichtung 140 vorgesehen, in der eine oder mehrere Auslassöffnungen 141 mit einer entsprechenden Quelle an Reinigungsmitteln verbunden sind, um damit insbesondere Außenbereiche der Melkbecher mit dem Reinigungsmittel, beispielsweise Wasser, zu benetzen. Auf diese Weise kann eine effiziente Reinigung der Außenseiten der Melkbecher 120 stattfinden, wobei in der gezeigten Ausführungsform somit unter Bereitstellung einer einzelnen Reinigungsposition für jeden Melkbecher 120 sowohl die Außenseiten als auch die Innenräume der Melkbecher gereinigt und desinfiziert werden können.

Während des Betriebs der Reinigungsanlage 100 werden die Melkbecher 130 an die Halterung 110 herangeführt, wobei dies automatisch mittels einer Transporteinrichtung, wie dies nachfolgend detaillierter erläutert ist, oder manuell erfolgen kann. Bei der Annäherung der Melkbecher 120 an die Halterung 130 kann durch die teilweise trichterförmige Ausbildung der Halteeinrichtung 110 eine effiziente Führung der Melkbecher 120 erfolgen, sobald ein mechanischer Kontakt mit der Halterung 110 erfolgt ist. Somit werden die Melkbecher 120 im Wesentlichen selbständig durch die sich verjüngende Form der Halterung 110 in den dargestellten Ausführungsformen zentriert und an die entsprechenden Reinigungspositionen geführt. In Fig. 1a ist die Reinigungsposition der Melkbecher 120 so dargestellt, dass ein Abstand zum Boden der Halterung 110 verbleibt, während in anderen Ausführungsformen die Melkbecher auf den Boden der Halterung 110 abgesenkt werden. Die Ausgabeeinrichtung 130 kann bereits vor dem Erreichen der endgültigen Reinigungsposition zur Ausgabe eines Reinigungsfluids aktiviert werden. In anderen Ausführungsformen wird die Reinigungsposition, die als Position zu verstehen ist, in der die Melkbecher 120 durch die Ausgabeeinrichtung 130 mit Reinigungsfluiden beaufschlagt werden, während gewisser Betriebsphasen verändert, um die eine effizientere Benetzung zu ermöglichen. Beispielsweise kann die Höhenposition der Melkbecher 120 variiert werden, um eine variierende Eindringtiefe der Reinigungsfluide zu ermöglichen. Eine entsprechende veränderliche Höhenposition kann durch eine geeignete Einrichtung, etwa eine Transporteinrichtung wie sie später beschrieben wird, erreicht werden.

In einigen anschaulichen Ausführungsformen kann bereits während des Positioniervorgangs für die Melkbecher 120 die Sprüheinrichtung 140 (siehe Fig. 1 e) aktiviert werden, um damit bereits eine effiziente Reinigung an der Außenseite der Melkbecher 120 über einen ausgedehnten Längenbereich hinweg zu erreichen. Nach oder während der Positionierung der Melkbecher 120 sind diese somit so angeordnet, dass zumindest ein Teil des Innenraums der Melkbecher 120 mittels der Ausgabeeinrichtungen 130 mit unterschiedlichen Reinigungsfluiden benetzt werden kann. Beispielsweise kann durch manuelle Betätigung der entsprechenden Ventileinrichtungen 131c, 132c eine gewünschte Menge und eine gewünschte Art an Reinigungsfluid über die Ausgabeeinrichtung 130 eingeführt werden. In anderen Ausführungsformen kann zumindest nach oder auch schon während der Positionierung der Melkbecher 120 ein entsprechender automatisierter Ablauf in Gang gesetzt werden, so dass ohne manuellen Zugriff eine vordefinierte Reinigungssequenz abläuft. Beispielsweise wird entsprechend europäischer Vorgaben gefordert, die Melkbecher 120 nach einem erfolgten Melkvorgang zunächst mit Wasser zu spülen und anschließend die Melkbecher mit Peressigsäure zu desinfizieren, wobei auch eine erforderliche Einwirkdauer des Desinfektionsmittels einzuhalten ist. Daraufhin ist ein weiterer Spülvorgang mit Wasser durchzuführen, um die Reste des Desinfektionsmittels effizient zu entfernen. Dabei können mittels der Reinigungsanlage 100 sowohl die Einwirkdauer als auch die Menge des zugeführten Reinigungsfluids effizient gesteuert werden, so dass gleichbleibende Betriebsbedingungen über eine Vielzahl von Reinigungsprozessen hinweg unter Einhaltung entsprechender Verordnungen beibehalten wird. In einigen Ausführungsformen kann eine entsprechende Reinigungssequenz, die zumindest die zuvor genannten drei Schritte umfasst, in einem Zeitfenster von 30 bis 60 Sekunden ausgeführt werden, wobei aber auch beliebige andere Zeitabläufe nach Bedarf möglich sind. Insbesondere kann auf Grund der Reinigungsanlage 100 auch eine entsprechende dynamische Anpassung stattfinden, beispielsweise wenn eine intensivere Reinigung erforderlich ist. Mittels der erfindungsgemäßen Reinigungsanlage 100 kann beispielsweise durch Zuführen einer Menge von 0,1 von 0,5 Litern Peressigsäure für vier Melkbecher 120 die geforderte Desinfektion zwischen den einzelnen Melkvorgängen erreicht werden, wobei die entsprechende Menge an verbrauchtem Reinigungsfluid nach jedem einzelnen Reinigungsprozess abgeführt werden kann, wie dies nachfolgend detaillierter erläutert ist, so dass jeder einzelne Reinigungsvorgang auf der Grundlage eines im Wesentlichen unkontaminierten, neu zugeführten Reinigungsfluids durchführbar ist. Des weiteren kann bei Bedarf eine entsprechende Desinfektion der Reinigungsanlage 100 selbst ausgeführt werden, wenn beispielsweise ohne Anwesenheit der Melkbecher 120 eine entsprechende Reinigungsflüssigkeit in der Halterung 110 gehalten wird oder diese mittels der Ausgabeeinrichtungen 130 und/oder der Sprüheinrichtung 140, falls diese vorgesehen ist, aufgebracht wird, wenn keine Melkbecher 120 positioniert sind. Auf diese Weise kann mit einem geringen Anteil an Reinigungsmittel der Kontaminationszustand der Reinigungsanlage 100 selbst auf einem gewünschten Niveau gehalten werden:

Während einzelner Schritte des Reinigungs- bzw. Desinfektionsprozesses kann eine aktive Verringerung der Menge des oder der Reinigungsfluide nach einer gewünschten Einwirkdauer herbeigeführt werden, etwa durch mechanische Bewegung der Melkbecher 120, oder dergleichen, wie dies nachfolgend noch ausführlicher beschrieben ist.

Fig. 1f zeigt schematisch die Reinigungsanlage 100 gemäß einer weiteren anschaulichen Ausführungsform, in der eine Steuereinrichtung 150 vorgesehen ist, die funktionsmäßig mit den Ventileinrichtungen 132c, 131 c verbunden, um damit die Zufuhr des entsprechenden Reinigungsfluids 132, 131 zu steuern. Die Steuereinrichtung 150 kann in anschaulichen Ausführungsformen eine entsprechende Reinigungssequenz implementiert haben, so dass in zeitlich koordinierter Weise die entsprechenden Fluidquellen 132a, 131 a mit den entsprechenden Ausgabeeinrichtungen 130 verbunden werden, so dass eine gewünschte Menge an entsprechendem Reinigungsfluid zugeführt wird. Des weiteren kann die Steuereinrichtung 150 in geeigneter Weise die Einwirkdauer entsprechender Reinigungsfluide einstellen, wobei in einigen anschaulichen Ausführungsformen eine festgelegte Einwirkdauer vorgegeben ist, während in anderen anschaulichen Ausführungsformen ein oder mehrere Parameterwerte veränderbar sind, um in dynamischer Weise die Einwirkdauer und/oder auch die Menge der zugeführten Reinigungsfluide zu steuern. Beispielsweise kann die Reinigungsanlage 100 eine entsprechende Sensoreinrichtung (nicht gezeigt) aufweisen, die ein Signal in Abhängigkeit des Kontaminationsgrades der in der Anlage 100 positionierten Melkbecher 120 ausgibt, auf dessen Grundlage sodann die Einwirkdauer und/oder die Menge eingestellt wird. In anderen anschaulichen Ausführungsformen kann eine Auswahl unterschiedlicher Reinigungsprogramme implementiert sein, die dann selektiv, beispielsweise durch manuelle Auswahl, abgerufen werden können. Durch das Vorsehen der entsprechenden Steuereinrichtung 150 kann somit ein hohes Maß an Unabhängigkeit von Einflüssen etwa von Bedienungsfehlern, und dergleichen erreicht werden.

In einer weiteren anschaulichen Ausführungsform ist ferner ein Einrichtung 160 vorgesehen, mit der in der Halterung 110, wenn diese in Form einer Kammer bzw. einer Wanne ausgeführt ist, ein gewünschter Pegel eines Reinigungsfluids gehalten werden kann. Beispielsweise kann die Einrichtung 160 ein Reservoir 161 aufweisen, in das gebrauchtes Reinigungsfluid über eine entsprechende Ablassleitung 162 eingeführt wird. In einigen anschaulichen Ausführungsformen kann die Ablassleitung 162 mit einer steuerbaren Ventileinrichtung versehen sein, so dass entsprechende Flüssigkeiten gesteuert abgelassen werden können. Auf diese Weise kann ein geeigneter Flüssigkeitspegel eingestellt werden, der durch entsprechendes gesteuertes Ablassen von Flüssigkeit auf einem gewünschten Niveau gehalten werden kann. In anderen Ausführungsformen kann die Ablassleitung 162 durch eine Öffnung in der Halterung 110 repräsentiert sein, wobei die Öffnung dann bei Vorhandensein eines Melkbechers 120 fluiddicht abgeschlossen werden kann. In anderen Ausführungsformen kann eine Ablassleitung 163 mit einer steuerbaren Ventileinrichtung 163c vorgesehen sein, um den Pegel in der Halterung 110 bei Bedarf auf einem gewünschten Niveau zu halten, wobei die Ventileinrichtung 163c betätigt werden kann, wenn in gewissen Betriebsphasen, beispielsweise bei einer Endreinigung, ein höheres Flüssigkeitsniveau gewünscht ist. In anderen Ausführungsformen kann die Begrenzungseinrichtung 160 andere geeignete Mittel aufweisen, etwa eine Steigleitung, etc., so dass bei Überschreiten einer eingestellten Höhe Flüssigkeit in das Reservoir 161 abläuft. Insbesondere kann auch eine Sensoreinrichtung, beispielsweise in Form eines Drucksensors, vorhanden sein, um damit ein Signal in Abhängigkeit der Füllhöhe in der Halterung 110 zu erhalten, das dann von der Steuereinrichtung 150 ausgewertet werden kann, um die entsprechende Füllhöhe einzustellen, indem beispielsweise die Ventileinrichtung 163c geeignet angesteuert wird.

Beispielsweise kann mittels der Einrichtung 160 ein gewünschter Flüssigkeitspegel in der Reinigungsanlage 100 beibehalten werden, wobei dann bei Positionierung der Melkbecher 120 die entsprechende Flüssigkeit mit einer entsprechenden Menge an Restflüssigkeit, die aus den Melkbechem 120 austritt, in das Reservoir 161 abgeführt werden kann. Daraufhin kann die Steuereinrichtung 150 dann eine geeignete Reinigungssequenz veranlassen, wobei bei Bedarf die entsprechenden Reinigungsfluide mittels der Einrichtung 160 mit einem gewünschten Flüssigkeitsniveau in der Halterung 110 gehalten werden können. Der Beginn einer entsprechenden Reinigungssequenz kann in einer anschaulichen Ausführungsform auf der Grundlage einer Sensoreinrichtung 151 bestimmt werden, die ein von der Positionierung der Melkbecher 120 abhängiges Signal an die Steuereinrichtung 150 zuführen kann, auf dessen Grundlage dann geeignete Steueraktivitäten veranlasst werden können. Beispielsweise kann die Sensoreinrichtung 151 eine druckempfindliche Sensoreinrichtung sein, so dass das Vorhandensein eines Melkbechers 120 erfasst werden kann. In einigen anschaulichen Ausführungsformen kann die Sensoreinrichtung 151 zur Pegelerfassung innerhalb der Halterung 110 herangezogen werden, wenn kein Melkbecher 120 vorhanden ist. In anderen anschaulichen Ausführungsformen kann die Sensoreinrichtung 151 in einer beliebigen anderen geeigneten Weise ausgebildet sein, die Anwesenheit eines Melkbechers 120 zu erfassen. Beispielsweise kann die Sensoreinrichtung 151 einen Druckschalter beinhalten, der bei Kontakt mit dem Melkbecher 120 ein entsprechendes Signal ausgibt. In anderen Ausführungsformen können Näherungsschalter oder andere Einrichtungen vorgesehen sein, um ein von der Relativposition des Melkbechers 120 in Bezug auf die Halterung 110 abhängiges Signal zu erzeugen.

Fig. 1g zeigt schematisch die Reinigungsanlage 100 gemäß einer weiteren anschaulichen Ausführungsform. Hier ist die Steuereinrichtung 150 in Form einer Vakuumansteuereinrichtung vorgesehen, so dass ein Betriebsunterdruck, der durch eine Vakuumquelle 181 erzeugt wird, in dem Melkbecher 120 durch die Steuereinrichtung 150 mittels einer Ventileinrichtung 152 steuerbar ist. In einer anschaulichen Ausführungsform kann mittels der Einrichtung 152 in Verbindung mit der Steuereinrichtung 150 der Betriebsunterdruck in dem Melkbecher 120 in Abhängigkeit der Positionierung des Melkbechers 120 aktiviert und deaktiviert werden. Beispielsweise ist es beim Betreiben der Reinigungsanlage 100 vorteilhaft, den Betriebsunterdruck in dem Melkbecher 120 zumindest während der Annäherung des Melkbechers 120 an die Anlage 100 aufrecht zu erhalten, so dass in den Melkbechem und in den damit verbundenen Milchleitungen vorhandene Restmilch nicht unkontrolliert verströmt. Bei Erreichen einer geeigneten Position über der Halterung 110 kann dann die Steuerung 150 das Vakuum deaktivieren, so dass dann entsprechende Milchrestmengen in kontrollierter Weise abfließen und somit entsorgt werden können. Sodann kann der weitere Ablauf des Reinigungsvorgangs in der Anlage 100 in geeigneter Weise ablaufen, beispielsweise mittels der Steuerung 150, um damit in geeigneter Weise ein oder mehrere Reinigungsfluide über die Ausgabeeinrichtung 130 in den Melkbecher 120 einzuführen.

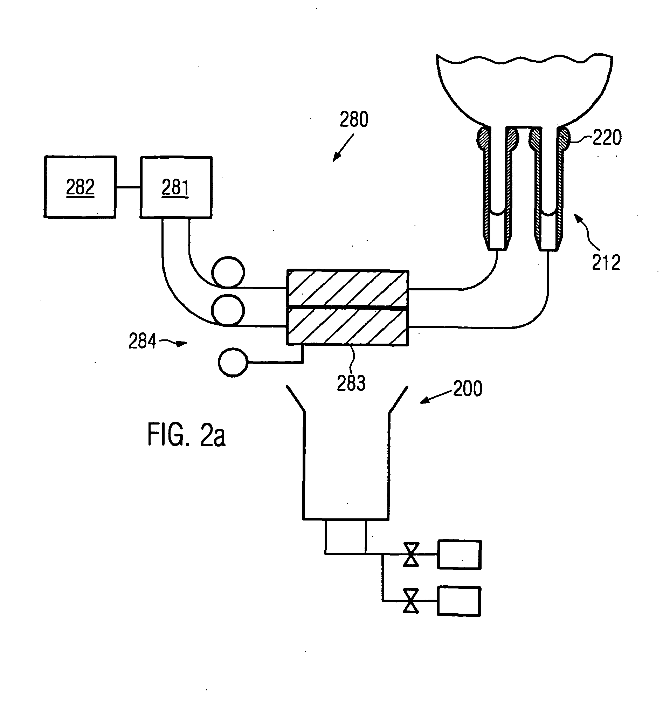

Fig. 2a zeigt schematisch eine Melkanlage 280, in der eine Vakuumquelle 281 ausgebildet ist, einen für das Melken erforderlichen Betriebsunterdruck bereitzustellen. Die Vakuumquelle 281 ist ferner mit einer Milchsammeleinrichtung 282 sowie einem entsprechenden Melkgeschirr 221 verbunden, das wiederum mehrere Melkbecher 220 aufweist. Des weiteren ist in der Melkanlage 280 eine Transporteinrichtung 284 vorgesehen, die so gestaltet ist, dass das Melkgeschirr 211 nach einem Melkvorgang in geeigneter Weise zu einer Reinigungsanlage 200 bewegt werden kann, um damit eine Zwischendesinfektion nach einzelnen Melkvorgängen zu ermöglichen. Die Reinigungsanlage 200 ist dabei so ausgebildet, wie dies zuvor im Zusammenhang mit der Reinigungsanlage 100 beschrieben ist. Somit ist die Reinigungsanlage 200 insbesondere ausgebildet, zwei oder mehrere unterschiedliche Reinigungsfluide mittels einer, jedem Melkbecher 220 zugeordneten Ausgabeeinrichtung, etwa der Ausgabeeinrichtung 130, wie sie zuvor beschrieben wurde, zuzuführen. In einer Ausführungsform ist in der Melkanlage 280 ferner eine Halteeinrichtung 283 vorgesehen, die so ausgebildet ist, dass das Melkgeschirr 211, d. h. insbesondere die Melkbecher 220 so angeordnet sind, dass sie geeignet manuell an das Euter eines Tieres angelegt werden können. Beispielsweise kann die Halteeinrichtung 283 so ausgebildet sein, dass während der Betriebsphase für das Melken, d. h. während eines Melkvorgangs und während des Anlegens und Abnehmens der einzelnen Melkbecher 220, eine im Wesentlichen horizontale Richtung durch die Halteeinrichtung 283 und damit auch eine im Wesentlichen horizontale Lage und Orientierung der darin enthaltenen Melkbecher 220 definiert ist. Des weiteren kann die Halteeinrichtung 283 ausgebildet sein, den Vorgang des Abnehmens der Melkbecher 220 in automatisierter oder halbautomatisierter Weise durchzuführen, indem beispielsweise auf das Einwirken eines Bedieners hin kurzzeitig das Betriebsvakuum unterbrochen wird, so dass die Melkbecher 220 abfallen und von der Halteeinrichtung 283 automatisch zurückgeholt werden können. In anderen Ausführungsformen kann auch der Vorgang des Abnehmens der Melkbecher 220 manuell ausgeführt werden, wobei die Halteeinrichtung 283 ein individuelles Abnehmen der Melkbecher 220 und ein Zurückführen in die Halterung 283 ermöglicht. Nach dem Ende eines entsprechenden Melkvorgangs kann die Transporteinrichtung 284 das Melkgeschirr 221 in geeigneter Weise über der Reinigungsanlage 200 positionieren, um damit eine entsprechende Positionierung der Melkbecher 220 an den dafür vorgesehenen Reinigungspositionen zu ermöglichen. In der in Fig. 2a gezeigten Ausführungsform kann dabei die Transporteinrichtung 284 so ausgebildet sein, dass die Halteeinrichtung 283 im Wesentlichen vertikal über der Reinigungsanlage 200 angeordnet wird, um damit ein Einführen der Melkbecher 220 in die entsprechende Halterung 210 der Reinigungsanlage 200 zu ermöglichen.

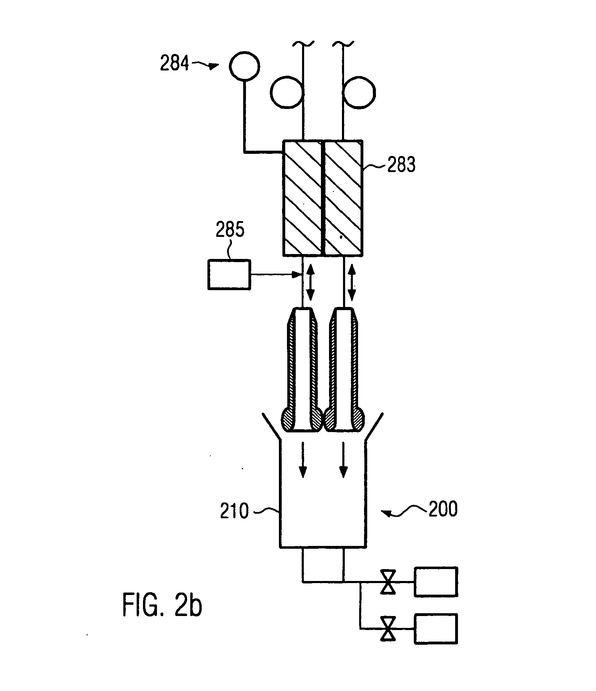

Fig. 2b zeigt schematisch die Melkanlage 280, wobei die Halteeinrichtung 283 vertikal positioniert ist. Wie zuvor auch mit Bezug zur Reinigungsanlage 100 beschrieben ist, ist in einer Ausführungsform eine entsprechende Vakuumansteuereinrichtung, beispielsweise in Form der Steuerung 150, oder der gleichen, vorgesehen, so dass zumindest während der Positionierphase, in der Restmilch unkontrolliert ausströmen kann, der Betriebsunterdruck im Melkbecher 220 anliegt, so dass im Wesentlichen keine Verschmutzung der Reinigungsanlage 200 außerhalb der Halterung 210 durch Restmilch hervorgerufen wird. In der in Fig. 2b gezeigten Phase kann sodann der Betriebsunterdruck wieder deaktiviert werden, so dass die Restmilch kontrolliert in die Halterung 210 abfließt. In anderen Ausführungsformen kann der Betriebsunterdruck weiterhin anliegen, bis die Melkbecher 220 in der Halterung 210 positioniert sind. Ferner kann, wie dies zuvor mit Bezug zu der Sprüheinrichtung 140 (siehe Fig. 1e) beschrieben wurde, während des Absenkens der Melkbecher 220 bereits eine Beaufschlagung mit einem Reinigungsmittel erfolgen, so dass die entsprechenden Außenseiten der Melkbecher 220 effizient über die gesamte Länge hinweg oder zumindest einen wesentlichen Teil davon gereinigt werden können. Das Absenken der Melkbecher 220 kann mittels der Transporteinrichtung 284 und/oder der Halteeinrichtung 283 bewerkstelligt werden, indem beispielsweise mittels Abrollen der Versorgungsschläuche für die Melkbecher 220 diese dann in der Halterung 210 positioniert werden. Daraufhin kann eine entsprechende Reinigungssequenz ausgeführt werden, wie dies zuvor erläutert ist. Dabei kann die Höhenposition der Melkbecher bei Bedarf während der Zuführung eines oder mehrerer Reinigungsfluide für die Benetzung des Innenraums der Melkbecher 220 variiert werden. In einigen Ausführungsformen werden die Melkbecher 220 nach einem oder mehreren Prozessschritten einem aktiven "Entfeuchtungsprozess" unterzogen, um damit Reinigungsfluid aus den Melkbechem 220 zu entfernen. Dazu wird in einem Beispiel die Transporteinrichtung 284 angesteuert, die Melkbecher 220 in der Halterung 210 anzuheben und mechanisch in Bewegung zu versetzen, um damit das Abtropfen der Flüssigkeit zu beschleunigen. Dazu ist in der Transporteinrichtung 284 ein Aktuator 285 vorgesehen, der eine geeignete Bewegung der Melkbecher hervorruft. Die aktive "Entfeuchtung" der Melkbecher 220 kann beispielsweise nach jedem Einleiten eines Fluids und nach der gewünschten Einwirkdauer erfolgen, oder wird nur nach bestimmten Schritten ausgeführt. Eine entsprechende mechanische Bewegung kann für mehrere Sekunden oder bei Bedarf auch länger ausgeführt werden. Wenn entsprechende Auslenkungen der Melkbecher 220 zu groß sind, so dass diese nicht innerhalb der Halterung 210 im angehobenen Zustand der Melkbecher ausgeführt werden können, kann die Transporteinrichtung 284 eine geeignete "Trockenposition" anfahren, in der die erforderliche "Bewegungsfreiheit" der Melkbecher gegeben ist. In anderen Ausführungsformen kann zusätzlich oder alternativ zum Aktuator 285 eine Einrichtung zur Erzeugung eines Gasstroms zur Entfeuchtung der Melkbecher 220 vorgesehen sein, so dass vorzugsweise eine auswärts gerichtete Strömung im Melkbecher 220 aufgebaut wird. Dazu kann eine Fluidquelle durch geeignete steuerbare Ventileinrichtungen mit dem Innenraum des Melkbechers über die entsprechenden Milchleitungen verbunden werden.

Nach erfolgter Reinigung der Melkbecher 220 auf der Grundlage mindestens zweier unterschiedlicher Reinigungsfluide kann das Melkgeschirr 221 sodann für einen weiteren Melkvorgang verwendet werden. Dazu kann die Transporteinrichtung 284 in der gezeigten Ausführungsform die Halteeinrichtung 283 in eine geeignete, d.h. im Wesentlichen horizontale, Position bringen, so dass dann die Melkbecher 220 für das Anlegen bereit stehen.

Wie zuvor erläutert ist, kann die Reinigungsanlage 200 in unterschiedlichen Betriebsmodi eingesetzt werden, wie dies zuvor auch erläutert ist, so dass beispielsweise bei Bedarf eine weitergehende Reinigung des Melkgeschirrs 221 initiiert werden kann, bei der beispielsweise Reinigungsflüssigkeit auch über die Anschlussleitungen der Melkbecher 220 in diese eingeführt werden kann, die dann effizient in der Reinigungsanlage 200 kontrolliert abgeführt werden kann. Auch kann in einer derartigen Reinigungsphase ein hoher Flüssigkeitspegel innerhalb der Halterung 210 erzeugt werden, so dass eine effiziente Reinigung auch der Außenseiten der Melkbecher 220 gewährleistet werden kann. Bei der Zwischendesinfektion sowie bei anderen Reinigungsphasen mittels der Reinigungsanlage 200 kann in einigen Ausführungsformen, wie dies zuvor erläutert ist, in geeigneter Weise auch der Betriebsunterdruck aktiviert und deaktiviert werden, um damit insbesondere während einer Endreinigung eine effiziente Spülung aller beteiligten Fluidverbindungen zu ermöglichen. Dazu kann in der Reinigungsanlage 200 eine Steuereinrichtung, etwa die Steuereinrichtung 150, vorgesehen sein, um in geeigneter Weise steuerbare Ventileinrichtungen zur Verbindung der Melkbecher mit einem Spülflüssigkeitsreservoir anzusteuern, so dass in geeigneter Weise Reinigungsflüssigkeit durch alle Fluidverbindungen strömen kann. Somit kann in effizienter Weise jegliche Art von Reinigung in der Anlage 200 effizient ausgeführt werden, wobei insbesondere die gleichzeitige Bereitstellung unterschiedlicher Reinigungsfluide durch eine einzelne Ausgabeeinrichtung ein hohes Maß an Flexibilität beim Durchführen der Zwischendesinfektion ermöglicht. Somit kann auf flexible Weise auf betriebsinterne Gegebenheiten reagiert werden, wobei jedoch dennoch die Einhaltung rechtlicher Bestimmungen effizient möglich ist. Insbesondere wird durch das Zuführen unterschiedlicher Reinigungsfluide an einer einzelnen Reinigungsposition zur Zwischendesinfektion der Melkbecher die Möglichkeit geschaffen, sowohl eine Verbesserung hinsichtlich der Wirksamkeit der desinfizierenden Wirkung also auch im Hinblick auf den Verbrauch an Reinigungsmitteln und in Bezug auf den Durchsatz zu erreichen, wobei die eine gleichbleibende Qualität des Prozesses auch bei manueller Durchführung in hohem Maße gewährleistet wird.

## Patentansprüche

1. Reinigungsanlage für Melkbecher mit:
einer Halterung zur Aufnahme zumindest eines Teils eines Melkbechers, der eine Öffnung zum Einführen einer Zitze enthält, wobei die Halterung in einer Kammer vorgesehen ist, die ausgebildet ist, einen vorgegebenen Fluidpegel zumindest in einer vorbestimmten Betriebsphase zu halten,
einer Fluidausgabeeinrichtung, die ausgebildet ist, ein erstes Reinigungsfluid aus einer ersten Fluidquelle und ein zweites Reinigungsfluid aus einer zweiten Fluidquelle in die Öffnung einzuführen, und
einer Vakuumansteuereinrichtung, die ausgebildet ist, einen Betriebsunterdruck im Melkbecher zu steuern, um den Unterdruck nach Positionierung des Melkbechers in der Halterung zumindest zeitweise zu deaktivieren.

2. Reinigungsanlage für Melkbecher nach Anspruch 1, wobei eine mit der Fluidausgabeeinrichtung verbundene Zufuhreinrichtung mit einer ersten Speiseleitung, die über eine erste Ventileinrichtung mit der ersten Fluidquelle in Verbindung steht, und einer zweiten Speiseleitung, die über eine zweite Ventileinrichtung mit der zweiten Fluidquelle in Verbindung steht, vorgesehen ist.

3. Reinigungsanlage für Melkbecher nach Anspruch 1 oder 2, wobei die Fluidausgabeeinrichtung eine Auslassöffnung aufweist, die von der ersten und der zweiten Fluidquelle gespeist werden kann.

4. Reinigungsanlage für Melkbecher nach einem der Ansprüche 1 bis 3, wobei die Fluidausgabeeinrichtung eine erste Auslassöffnung, die von der ersten Fluidquelle gespeist werden kann, und eine zweite Auslassöffnung, die von der zweiten Fluidquelle gespeist werden kann, aufweist.

5. Reinigungsanlage für Melkbecher nach einem der Ansprüche 1 bis 4, die ferner eine Steuereinrichtung aufweist, die ausgebildet ist, die Zufuhr des ersten und des zweiten Reinigungsfluids zur Fluidausgabeeinrichtung zu steuern.

6. Reinigungsanlage für Melkbecher nach Anspruch 5, wobei die Steuereinrichtung ausgebildet ist, die Zuführung des ersten und des zweiten Reinigungsfluids zeitlich aufeinander folgend zu veranlassen.

7. Reinigungsanlage für Melkbecher nach Anspruch 6, wobei die Steuereinrichtung ausgebildet ist, die Zufuhr des ersten Reinigungsfluids, danach die Zufuhr des zweiten Reinigungsfluids und danach erneut die Zufuhr des ersten Reinigungsfluids zu veranlassen.

8. Reinigungsanlage für Melkbecher nach einem der Ansprüche 5 bis 7, wobei die Steuereinrichtung ferner ausgebildet ist, eine vorbestimmte Einwirkdauer für das erste und/oder das zweite Reinigungsfluid bereit zu stellen, bevor das Zuführen des anderen Reinigungsfluids veranlasst wird.

9. Reinigungsanlage für Melkbecher nach Anspruch 1, wobei eine Pegelbegrenzungseinrichtung vorgesehen ist, die geeignet ist, den Fluidpegel in der Kammer auf einen vorbestimmten maximalen Pegel zu begrenzen.

10. Reinigungsanlage für Melkbecher nach einem der Ansprüche 1 bis 9, die ferner eine Fluidentfeuchtungseinrichtung aufweist, die ausgebildet ist, den Anteil des ersten und/oder zweiten Fluids in dem Melkbecher aktiv zu reduzieren.

11. Reinigungsanlage für Melkbecher nach Anspruch 10, wobei die Fluidentfeuchtungseinrichtung eine Aktuatorvorrichtung umfasst, die ausgebildet ist, den Melkbecher nach Beaufschlagung mit dem ersten und/oder zweiten Reinigungsfluid in Bewegung zu versetzen.

12. Melkanlage mit
einem Melkgeschirr mit mehreren Melkbechern,
einer Vakuumeinrichtung zur Bereitstellung eines Unterdrucks in dem Melkgeschirr zum Absaugen von Milch,
einer Milchsammelleitung, die mit dem Melkgeschirr und der Vakuumeinrichtung verbunden ist und
einer Reinigungsanlage für Melkbecher nach einem der Ansprüche 1 bis 11.

13. Melkanlage nach Anspruch 12, die ferner eine Halteeinrichtung für die Melkbecher aufweist, die ausgebildet ist, die Melkbecher für das manuelle Anlegen für den Melkvorgang zu positionieren.

14. Melkanlage nach Anspruch 12 und 13, wobei die Transporteinrichtung mit der Halteeinrichtung verbunden und ausgebildet ist, die Halteeinrichtung nach einem Melkvorgang relativ zu der Reinigungsanlage so zu positionieren, dass die Melkbecher in die Halterung der Reinigungsanlage platziert werden.

15. Melkanlage nach Anspruch 12, wobei die Vakuumansteuereinrichtung den Betriebsunterdruck bis zur Positionierung der Melkbecher in der Halterung aktiv lässt.

## Claims

1. Cleaning system for milking cups, comprising:
a mounting for receiving at least a portion of a milking cup containing an opening for introducing a teat, wherein the mounting is provided in a chamber designed to maintain a given fluid level at least in a predetermined operating phase,
a fluid dispensing device designed to introduce a first cleaning fluid from a first fluid source and a second cleaning fluid from a second fluid source into the opening, and
a vacuum control means design means designed to control an operating vacuum in the milking cup for deactivating at least temporarily the vacuum after the positioning of the milking cup in the mounting.

2. Cleaning system for milking cups according to claim 1, wherein a supply line connected to the fluid dispensing device having a first feed line in communication with a first fluid source via a first valve means, and a second feed line in communication with the second fluid source via a second valve means, is provided.

3. Cleaning system for milking cups according to claim 1 or 2, wherein the fluid dispensing device comprises an outlet that can be fed by the first and by the second fluid sources.

4. Cleaning system for milking cups according to one of claims 1 to 3, wherein the fluid dispensing device comprises a first outlet that can be fed by the first fluid source, and a second outlet that can be fed by the second fluid source.

5. Cleaning system for milking cups according to one of claims 1 to 4, further comprising a control means designed to control the supply of the first and the second cleaning fluids to the fluid dispensing device.

6. Cleaning system for milking cups according to claim 5, wherein the control means is designed to cause the supply of the first and the second cleaning fluids in chronological sequence.

7. Cleaning system for milking cups according to claim 6, wherein the control means is designed to cause the supply of the first cleaning fluid, and the supply of the second cleaning fluid, and subsequently again the supply of the first cleaning fluid.

8. Cleaning system for milking cups according to one of claims 5 to 7, wherein the control means is further designed to provide a predetermined application time for the first and/or the second cleaning fluid before the introduction of the other cleaning fluid is caused.

9. Cleaning system for milking cups according to claim 1, wherein a level limiting means is provided which is suited to limit the fluid level and a chamber to predetermine maximum level.

10. Cleaning system for milking cups according to one of claims 1 to 9, further comprising a fluid dehumidification means designed to actively reduce the proportion of the first and/or the second fluid in the milking cup.

11. Cleaning system for milking cups according to one of claim 10, wherein the fluid dehumidification means comprises an actuator means designed to move the milking cup after application of the first and/or the second cleaning fluid.

12. Milking plant, comprising:
dairy utensils with several milking cups,
a vacuum means for providing a vacuum in the dairy utensils for sucking off milk,
a milk collecting means connected to the dairy utensils and the vacuum means, and
a cleaning system for milking cups according to one of claims 1 to 11.

13. Milking plant according to claim 12, further comprising a holding means for the milking cups designed to position the milking cups to be manually placed for the milking process.

14. Milking plant according to claims 12 and 13, wherein the transport means is connected to the holding means and designed to position the holding means relative to the cleaning system after a milking process, such that the milking cups are placed in the mounting of the cleaning system.

15. Milking plant according to claim 12, wherein the vacuum control means keeps the operating vacuum active until the milking cups are positioned in the mounting.

## Revendications

1. Installation de nettoyage de gobelets trayeurs comprenant :
un support pour recevoir au moins une partie d'un gobelet trayeur qui comporte une ouverture pour introduire un trayon, dans laquelle le support est agencé dans une chambre conformée pour maintenir un niveau de fluide donné au moins dans une phase de service prédéterminée,
un dispositif de distribution de fluide conçu pour introduire dans l'ouverture un premier fluide de nettoyage provenant d'une première source de fluide et un deuxième fluide de nettoyage provenant d'une deuxième source de fluide, et
un dispositif de contrôle de vide conçu pour commander une sous-pression de service dans le gobelet trayeur de manière à désactiver au moins temporairement la sous-pression après le positionnement du gobelet trayeur dans le support.

2. Installation de nettoyage de gobelets trayeurs selon la revendication 1, dans laquelle un dispositif d'alimentation connecté au dispositif de distribution de fluide est pourvu d'une première conduite d'alimentation qui est connectée via un premier dispositif de vanne avec la première source de fluide et d'une deuxième conduite d'alimentation qui est connectée via un deuxième dispositif de vanne avec la deuxième source de fluide.

3. Installation de nettoyage de gobelets trayeurs selon la revendication 1 ou 2, dans laquelle le dispositif de distribution de fluide comporte une ouverture de sortie qui peut être alimentée par les première et deuxième sources de fluide.

4. Installation de nettoyage de gobelets trayeurs selon l'une des revendications 1 à 3, dans laquelle le dispositif de distribution de fluide comporte une première ouverture de sortie qui peut être alimentée par la première source de fluide et une deuxième ouverture de sortie qui peut être alimentée par la deuxième source de fluide.

5. Installation de nettoyage de gobelets trayeurs selon l'une des revendications 1 à 4, comportant en outre un dispositif de commande conçu pour commander l'alimentation des premier et deuxième fluides de nettoyage vers le dispositif de distribution de fluide.

6. Installation de nettoyage de gobelets trayeurs selon la revendication 5, dans laquelle le dispositif de commande est conçu pour commander l'alimentation successive et temporisée des premier et deuxième fluides de nettoyage.

7. Installation de nettoyage de gobelets trayeurs selon la revendication 6, dans laquelle le dispositif de commande est conçu pour commander l'alimentation du premier fluide de nettoyage, ensuite l'alimentation du deuxième fluide de nettoyage, puis de nouveau l'alimentation du premier fluide de nettoyage.

8. Installation de nettoyage de gobelets trayeurs selon l'une des revendications 5 à 7, dans laquelle le dispositif de commande est en outre conçu pour procurer une durée d'action prédéterminée pour le premier et/ou le deuxième fluide de nettoyage avant que l'alimentation de l'autre fluide de nettoyage ne soit commandée.

9. Installation de nettoyage de gobelets trayeurs selon la revendication 1, dans laquelle un dispositif de limitation de niveau adapté pour limiter le niveau de fluide dans la chambre à un niveau maximal prédéterminé est pourvu.

10. Installation de nettoyage de gobelets trayeurs selon l'une des revendications 1 à 9, comportant en outre un dispositif de déshumidification de fluide conçu pour réduire activement la proportion du premier et/ou du deuxième fluide dans le gobelet trayeur.

11. Installation de nettoyage de gobelets trayeurs selon la revendication 10, dans laquelle le dispositif de déshumidification de fluide comporte un dispositif à actuateur conçu pour mettre en mouvement le gobelet trayeur après l'application du premier et/ou du deuxième fluide de nettoyage.

12. Installation de traite comportant
une machine de traite à plusieurs gobelets trayeurs,
un dispositif de mise sous vide pour produire une sous-pression dans la machine de traite afin d'aspirer le lait,
une conduite de collecte de lait connectée à la machine de traite et au dispositif de mise sous vide, et
une installation de nettoyage de gobelets trayeurs selon l'une des revendications 1 à 11.

13. Installation de traite selon la revendication 12, comportant en outre un dispositif de retenue des gobelets trayeurs conçu pour positionner les gobelets trayeurs pour leur placement manuel lors de la procédure de traite.

14. Installation de traite selon les revendications 12 et 13, dans laquelle le dispositif de transport est connecté au dispositif de retenue et conçu pour positionner le dispositif de retenue après une procédure de traite par rapport à l'installation de nettoyage de telle manière que les gobelets trayeurs sont placés dans le support de l'installation de nettoyage.

15. Installation de traite selon la revendication 12, dans laquelle le dispositif de contrôle de vide maintient la sous-pression de service active jusqu'au positionnement des gobelets trayeurs dans le support.
